# FASCICULE DE BREVET EUROPEEN

(11) **EP 1 898 155 B1**
(45) Date de publication et mention de la délivrance du brevet: **17.12.2014**
(21) Numéro de dépôt: 07114095.8
(22) Date de dépôt: 09.08.2007
(51) Int. Cl.: F23R 3/04

(54) **Chambre de combustion annulaire d'une turbomachine**
Ringförmige Brennkammer eines Turbotriebwerks
Annular combustion chamber of a turbomachine

(30) Priorité: 28.08.2006 FR 0653478
(43) Date de publication de la demande: 12.03.2008
(73) Titulaire: SNECMA, 75015 Paris (FR)
(72) Inventeur: Commaret, Patrice, 77950, Rubelles (FR); Duret, Jean-Michel, 91070, Bondoufle (FR); Hernandez, Didier, 77720, Quiers (FR); Locatelli, David, 01170, Gex (FR)
(74) Mandataire: Besnard, Christophe Laurent

(56) Documents cités:
- EP-A- 1 265 031
- EP-A- 1 265 033
- EP-A- 1 400 756
- US-B1- 6 868 675

## Description

L'invention concerne une chambre de combustion annulaire d'une turbomachine. Elle se destine à tout type de turbomachine: turboréacteur, turbopropulseur, turbine à gaz terrestre...

Plus particulièrement, l'invention concerne une chambre de combustion annulaire d'une turbomachine du type comprenant une paroi intérieure, une paroi extérieure et un fond de chambre disposé entre lesdites parois, dans la région amont de ladite chambre, le fond de chambre présentant un rebord de fixation extérieur et/ou intérieur, et la paroi extérieure et/ou intérieure présentant un rebord de fixation amont, le fond de chambre et la paroi extérieure et/ou intérieure étant fixés ensemble par le rebord de fixation.

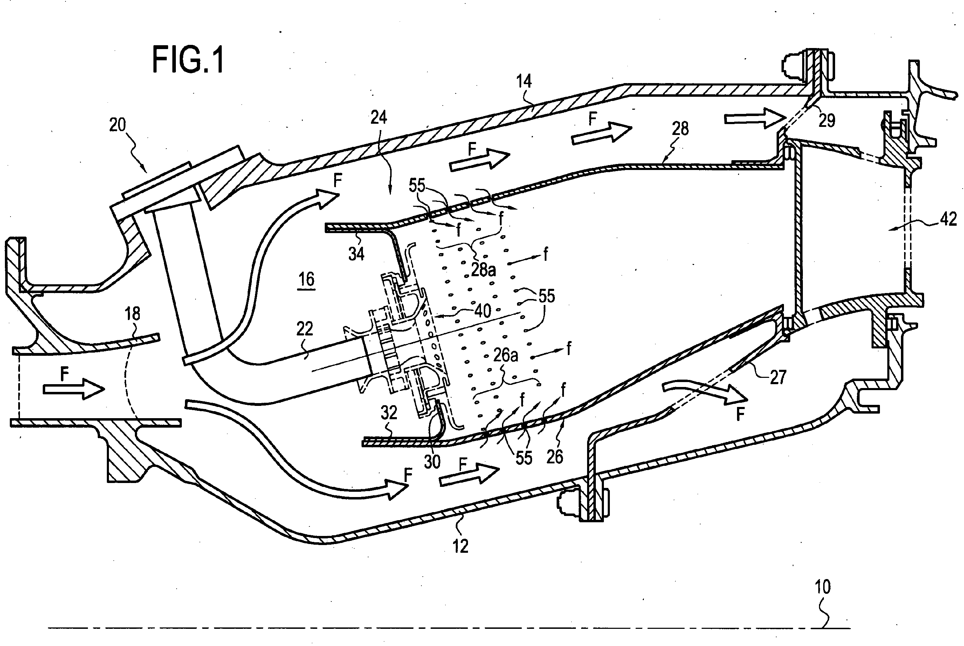

Une partie de turboréacteur comprenant une chambre de combustion connue, du type précité, est représentée sur la figure 1.

Une chambre de combustion annulaire du type précité est aussi divulguée dans US 6 868 675 B1.

Cette chambre de combustion 24 comprend une paroi intérieure 26, une paroi extérieure 28 et un fond de chambre 30 disposé entre lesdites parois, dans la région amont de ladite chambre. Les parois intérieure 26 et extérieure 28 sont circulaires et coaxiales d'axe 10, cet axe étant l'axe de rotation du turboréacteur.

L'amont et l'aval sont définis par rapport au sens d'écoulement normal des gaz à l'intérieur du turboréacteur.

Le fond de chambre 30 présente sur sa périphérie intérieure et extérieure, respectivement, des rebords de fixation intérieur 32 et extérieur 34. D'autre part, les parois intérieure 26 et extérieure 28 présentent respectivement à leur extrémité amont des rebords de fixation 36 et 38. Le fond de chambre 30 et la paroi extérieure 28 (ou intérieure 26) sont fixés l'un à l'autre par les rebords 34 et 38 (ou les rebords 32 et 36) au moyen de boulons.

Le flux d'air F en provenance du compresseur du turboréacteur (non représenté), situé en amont de la chambre de combustion 24, est symbolisé par les flèches F sur la figure 1.

La portion de paroi extérieure 28a (ou intérieure 26a) située juste en aval du fond de chambre 30 est soumise en fonctionnement à de très hautes températures, et il est nécessaire de refroidir cette portion de paroi 28a le plus efficacement possible.

Pour assurer un tel refroidissement, il est connu de réaliser dans cette portion de paroi 28a (ou 26a) de multiples perforations de petites tailles (la taille de ces multiperforations est volontairement exagérée sur les figures), appelées multiperforations 55

Ces multiperforations 55 sont alimentées en air par le flux d'air F circulant autour de la chambre 24, de manière à créer un film d'air protecteur f sur la face intérieure (i.e. la face tournée vers l'intérieur de la chambre 24) de la portion de paroi 28a (ou 26a). Ce film d'air est symbolisé par les flèches f sur la figure 1.

L'invention a pour but de proposer une nouvelle solution pour refroidir la (ou les) portion(s) de parois extérieure(s) et/ou intérieure(s) située(s) juste en aval du fond de chambre. Cette nouvelle solution peut être utilisée seule ou en complément des solutions de refroidissement connues à ce jour, comme les multiperforations précitées.

Aussi, l'invention a pour objet une chambre de combustion annulaire d'une turbomachine, comprenant une paroi intérieure, une paroi extérieure et un fond de chambre disposé entre lesdites parois, dans la région amont de ladite chambre, le fond de chambre présentant un rebord de fixation extérieur et/ou intérieur, et la paroi extérieure et/ou intérieure présentant un rebord de fixation amont, le fond de chambre et la paroi extérieure et/ou intérieure étant fixés ensemble par leurs rebords de fixation, caractérisée en ce que des canaux de refroidissement sont réalisés entre ces rebords de fixation, ces canaux débouchant à l'intérieur de la chambre de combustion.

Ces canaux permettent de délivrer de l'air en amont des faces intérieures des portions de parois intérieure et extérieure situées juste en aval du fond de chambre, de manière à refroidir celles-ci. De plus, en jouant sur le nombre de canaux, et sur la répartition de ceux-ci, on peut créer un film d'air protecteur sur ces faces intérieures, ce film formant une barrière contre les gaz chauds de la chambre de combustion.

L'invention et ses avantages seront mieux compris à la lecture de la description détaillée qui suit d'exemples de réalisation de l'invention. Cette description fait référence aux figures annexées, sur lesquelles :
- la figure 1 est une vue schématique en demi-section axiale, d'une partie de turbomachine équipée d'une chambre de combustion connue ;
- la figure 2 est une demi-coupe axiale d'un premier exemple de chambre de combustion selon l'invention ;
- la figure 3A est une vue en perspective partielle, suivant la flèche III, du rebord de fixation amont de la paroi extérieure de la chambre de combustion de la figure 2 ;
- la figure 3B est une vue analogue à celle de la figure 3A, montrant un autre exemple de rebord de fixation.
- la figure 4 est une demi-coupe axiale d'un deuxième exemple de chambre de combustion selon l'invention ;
- la figure 5 est une vue en perspective partielle, suivant la flèche V, du rebord de fixation amont de la paroi extérieure ;
- la figure 6 est une demi-coupe axiale d'un troisième exemple de chambre de combustion selon l'invention ;
- la figure 7A est une vue de détail en perspective suivant la flèche VII de la figure 6, montrant notamment l'entretoise utilisée selon l'invention;
- la figure 7B est une vue analogue à celle de la figure 7A montrant un autre exemple d'entretoise.

La figure 1 représente schématiquement en demi-section axiale une partie de turboréacteur d'avion équipé d'une chambre de combustion connue, et permet de visualiser l'environnement de cette chambre.

La partie de turboréacteur de la figure 1 comprend :
- une enveloppe circulaire intérieure, ou carter intérieur 12, d'axe principal correspondant à l'axe de rotation 10 de la turbomachine et une enveloppe circulaire extérieure, ou carter extérieur 14, coaxiale ;
- un espace annulaire 16 compris entre les deux carters 12 et 14 recevant le comburant comprimé, généralement de l'air, provenant d'un compresseur situé en amont (non représenté), au travers d'un conduit annulaire de diffusion 18.

L'espace 16 comporte de l'amont vers l'aval de la chambre de combustion :
- un ensemble d'injection formé d'une pluralité de systèmes d'injection 20 régulièrement répartis autour du conduit 18 et comportant chacun une buse d'injection de carburant 22 fixée sur le carter extérieur 14 ;
- une chambre de combustion 24 telle que précédemment décrite. Le fond de chambre 30 est pourvu d'orifices 40 pour permettre l'injection du carburant et d'une partie du comburant dans la chambre de combustion. Un système de maintien, un mélangeur et un déflecteur (représentés en pointillés) sont associés à chaque buse d'injection 22 et sont montés sur le fond de chambre 30, à l'intérieur des orifices 40 ;
- des brides d'accrochage intérieure 27 et extérieure 29, reliant respectivement les parois intérieure et extérieure 26 et 28 aux carters intérieure et extérieure 12 et 14 ; et
- un distributeur annulaire 42 formant un étage d'entrée de turbine haute pression (non représentée).

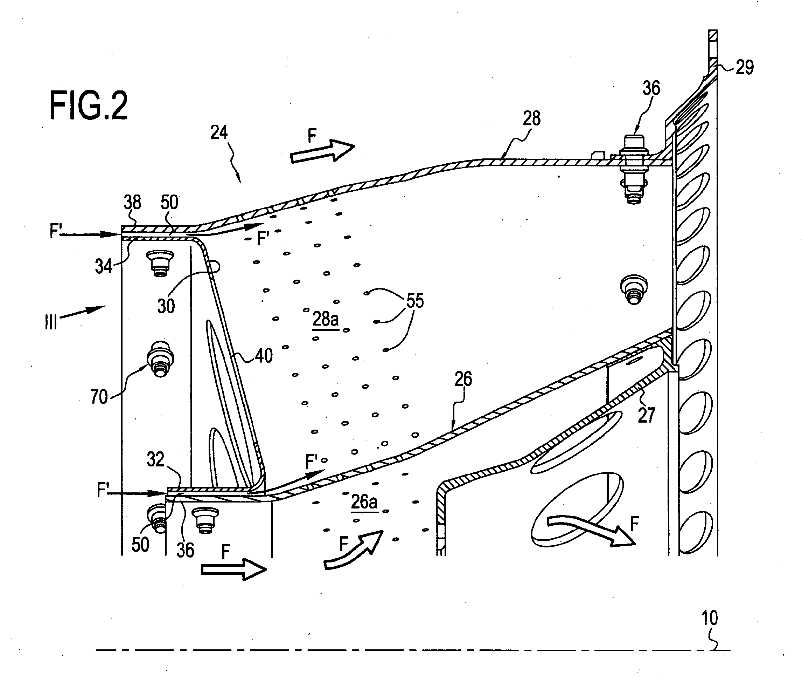

En référence à la figure 2, nous allons maintenant décrire un premier exemple de chambre de combustion selon l'invention.

Cette chambre de combustion est du type de celle de la figure 1 et les mêmes références numériques sont utilisées pour désigner les éléments communs entre ces deux chambres.

La chambre de la figure 2 diffère de la chambre connue de la figure 1 en ce qu'elle présente des canaux de refroidissement 50 selon l'invention, réalisés, d'une part, entre le rebord de fixation extérieur 34 du fond de chambre 30 et le rebord de fixation amont 38 de la paroi extérieure 28 et, d'autre part, entre le rebord de fixation intérieur 32 du fond de chambre 30 et le rebord de fixation amont 36 de la paroi intérieure 26.

Ces canaux 50 sont traversés par un flux d'air F' (symbolisé par des flèches) dérivé du flux d'air F. Le flux d'air F' permet de refroidir les faces internes des portions de parois intérieures 26a et extérieures 28a situées juste en aval du fond de chambre 30. Ces canaux 50 viennent donc en complément des multiperforations 55 et permettent d'améliorer le refroidissement desdites portions de parois 26a et 28a.

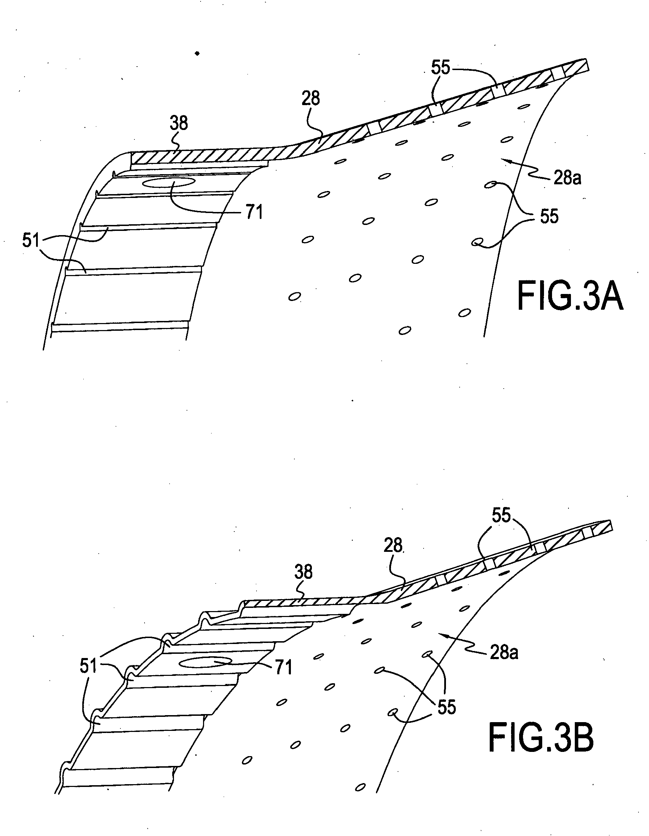

Les canaux 50 peuvent être réalisés de différentes manières. Dans l'exemple des figures 2 et 3, ils sont réalisés en faisant des rainures 51 sur la face interne du rebord de fixation 38 (ou 36) de la paroi externe 28 (ou interne 26), comme représenté sur les figures 3A et 3B. Ces rainures peuvent être réalisées par enlèvement de matière, notamment par usinage du rebord 38, comme sur la figure 3A, ou par déformation de ce rebord, notamment par emboutissage, comme sur la figure 3B.

Les canaux 50 peuvent également être réalisés en faisant des rainures sur la face externe du rebord de fixation extérieur 34 (ou intérieur 32) du fond de chambre 30.

Selon une autre possibilité, les canaux sont réalisés en faisant des rainures à la fois sur le rebord de fixation extérieur 34 (ou intérieur 32) du fond de chambre 30 et sur le rebord de fixation 38 (ou 36) de la paroi extérieure 28 (ou intérieure 26). On peut ensuite faire coïncider les rainures du fond de chambre avec celles de la paroi 28 (ou 26) ou au contraire les décaler et, notamment, les disposer en quinconce.

Selon une autre possibilité, non représentée, les rebords de fixation présentent une épaisseur suffisante pour pouvoir réaliser les canaux de refroidissement 50 dans l'épaisseur de ces rebords.

De manière générale, on notera que les canaux de refroidissement 50 pourraient être réalisés uniquement entre le rebord extérieur 34 et le rebord 38, ou uniquement entre le rebord intérieur 32 et le rebord 36.

Dans l'exemple de la figure 2, le fond de chambre 30 est fixé aux parois extérieure 28 et intérieure 26 par boulonnage à travers les rebords de fixation 32, 34, 36, 38. Plus précisément des boulons 70 sont passés dans des trous 71 prévus à cet effet dans lesdits rebords. Le boulonnage présente l'avantage d'autoriser le démontage des parois par rapport au fond de chambre. Toutefois, d'autres systèmes de fixation pourraient être envisagés.

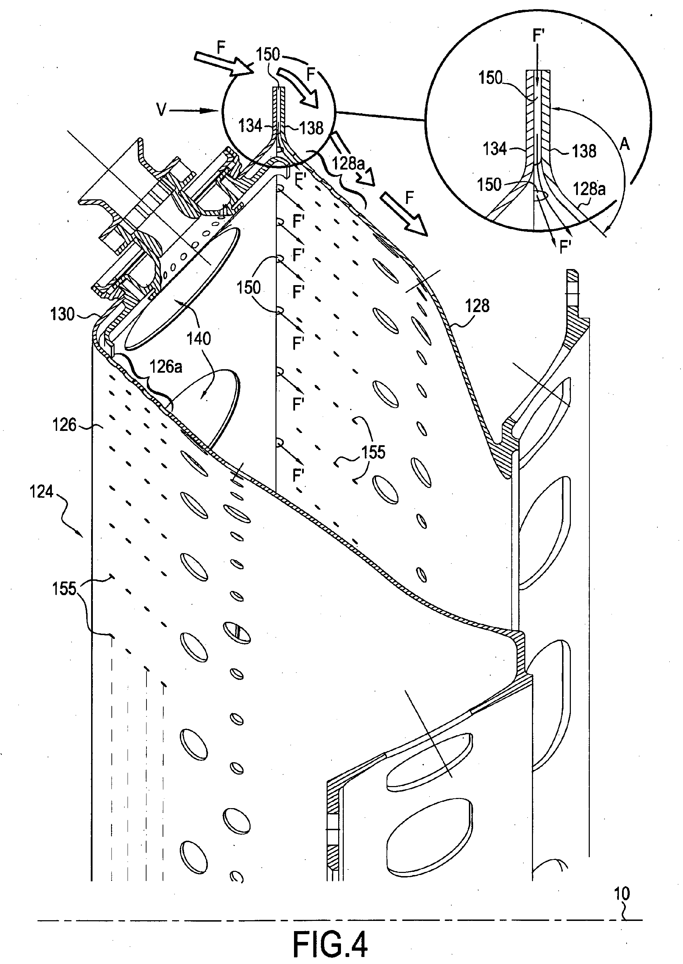

En référence à la figure 4, on va décrire un deuxième exemple de chambre de combustion selon l'invention. Les éléments de cette chambre 124 analogues à ceux de la chambre 24 de la figure 2 sont repérés par les mêmes références numériques augmentées de 100.

La chambre 124 est une chambre dite convergente, car sa section diminue de l'amont vers l'aval. En outre, la chambre 24 est dite à forte inclinaison car, en comparaison avec les chambres des figures 1 et 2, ses lignes directrices sont fortement inclinées par rapport à l'axe de rotation 10 de la turbomachine. Le fait d'incliner de cette manière la chambre de combustion 124 permet de réduire son encombrement suivant l'axe 10 de la turbomachine.

Dans la chambre de combustion 124, la paroi intérieure 126 et le fond de chambre 130 sont formés en une seule partie de sorte que le fond de chambre 130 ne présente pas de rebord de fixation intérieur et que la paroi intérieure 126 ne présente pas de rebord de fixation amont.

En revanche, le fond de chambre 130 présente un rebord de fixation extérieur 134 et la paroi extérieure 128 présente un rebord de fixation amont 138. Le fond de chambre 130 et la paroi extérieure 128 sont assemblés au niveau de leurs rebords de fixation par boulonnage. Un tel assemblage permet de démonter la paroi extérieure 128 pour accéder à l'intérieur de la chambre de combustion 124 dans le cadre d'opérations de réparation ou de maintenance.

Dans la chambre de combustion 124, les rebords de fixation 134 et 138 ne sont pas orientés axialement (i.e. suivant l'axe 10) comme dans les figures 1 et 2, mais plutôt radialement (i.e. ils sont sensiblement perpendiculaires à l'axe 10). Une telle orientation du rebord de fixation extérieur 134 permet, entre autres avantages, de fabriquer plus facilement le fond de chambre. En particulier, on peut fabriquer celui-ci à partir d'une tôle, notamment par emboutissage, ce qui se révèle beaucoup plus économique que de réaliser celui-ci à partir d'une pièce taillée dans la masse.

Cependant, les rebords 134 et 138 orientés de cette manière, forment un obstacle pour le flux d'air F. Ainsi, ce flux F contourne les rebords 134, 138, et, en même temps, la portion de paroi extérieure 128a située juste derrière ces rebords, de sorte que cette portion de paroi 128a est mal refroidie, en particulier car ses multiperforations 155 ne sont plus alimentées correctement en air.

Dans ce type de configuration où les rebords 134, 138 masquent la portion de paroi 128a, le système de refroidissement de l'invention se révèle particulièrement intéressant car, d'une certaine manière, il permet de compenser la mauvaise alimentation des multiperforations 155 et garantit ainsi un refroidissement suffisant de la portion de paroi extérieure 128a.

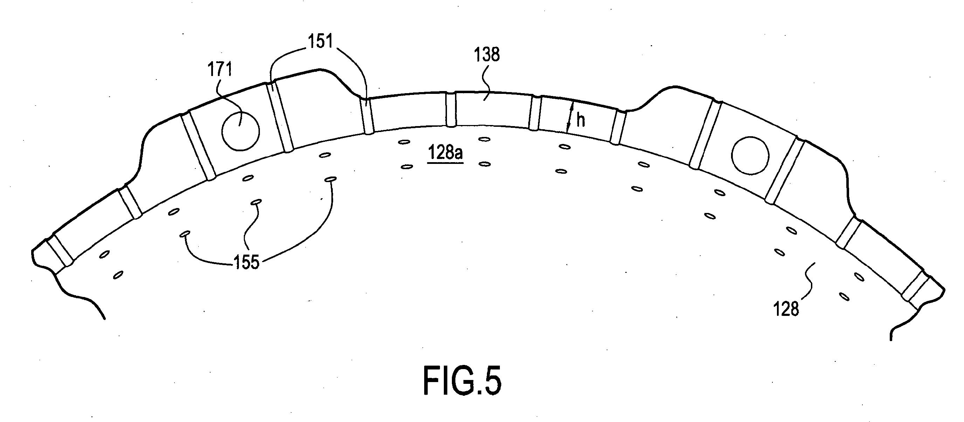

Selon un mode de réalisation de l'invention, afin de masquer le moins possible la portion de paroi 128a, les rebords de fixation 134 et 138 sont festonnés, comme représenté sur la figure 5. On limite ainsi la déviation du flux d'air F au niveau des portions de hauteur réduite h.

Les canaux de refroidissement 150 de la figure 4 sont réalisés en faisant des rainures 151 sur la face amont du rebord de fixation 138 de la paroi extérieure 128, comme représenté sur la figure 5, et/ou sur la face aval du rebord de fixation extérieur 134 du fond de chambre 130.

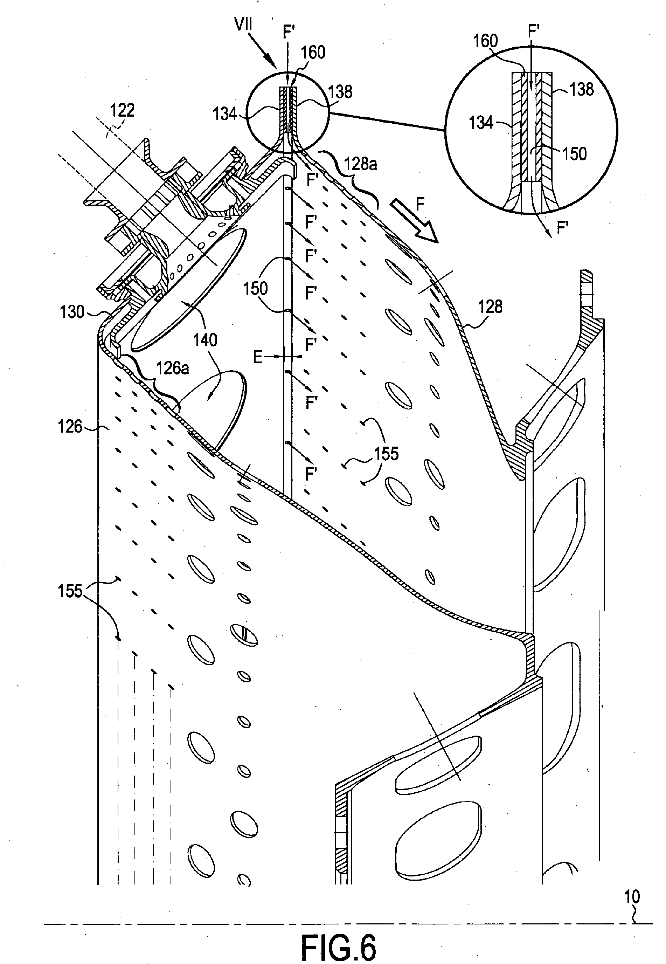

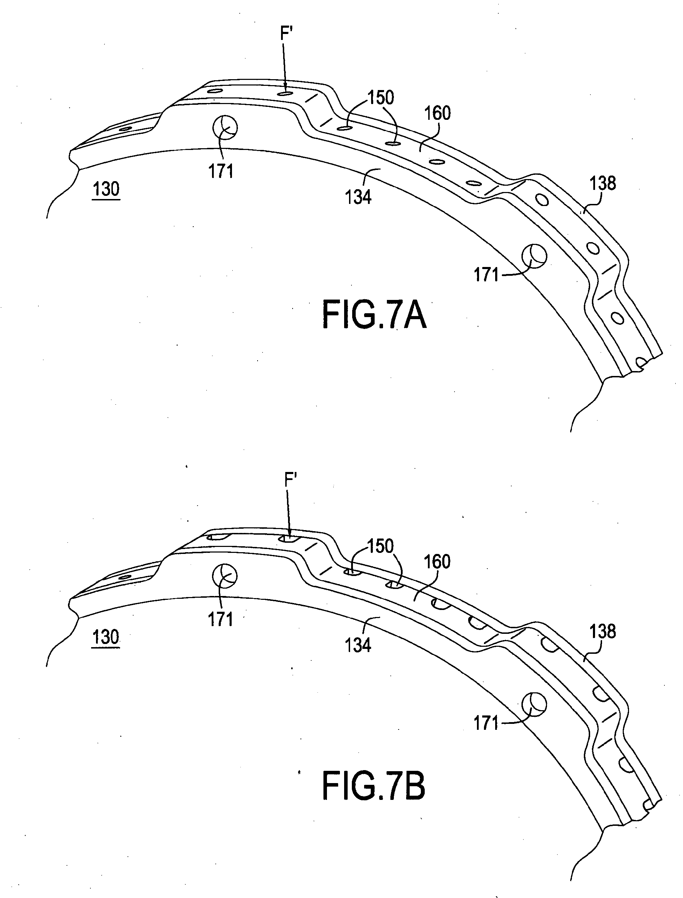

Les figures 6, 7A et 7B représentent un troisième exemple de chambre de combustion selon l'invention qui diffère uniquement de la chambre de la figure 4 en ce qu'une entretoise 160 est prévue entre les rebords de fixation 134 et 138.

L'entretoise 160 a la forme d'un anneau d'épaisseur E (mesurée suivant l'axe 10) et est festonnée à l'image des rebords 134 et 138.

En jouant sur l'épaisseur E de l'entretoise 160, on ajuste la position du fond de chambre 130. Ceci permet de positionner correctement ce fond de chambre 130 par rapport aux buses d'injection de carburant 122 représentées en pointillé sur la figure 6.

Dans l'exemple des figures 6 et 7A, les canaux de refroidissement 150 sont réalisés (généralement percés) dans l'épaisseur de l'entretoise 160.

Selon un autre mode de réalisation, les canaux de refroidissement 150 sont formés par des rainures faites sur un des côtés (voire sur les deux côtés) de l'entretoise 160 comme représenté sur la figure 7B.

## Revendications

1. Chambre de combustion annulaire d'une turbomachine, comprenant une paroi intérieure (26, 126), une paroi extérieure (28, 128) et un fond de chambre (30, 130) disposé entre lesdites parois, dans la région amont de ladite chambre, le fond de chambre présentant un rebord de fixation extérieur (34, 134) et/ou intérieur (32, 132), et la paroi extérieure et/ou intérieure présentant un rebord de fixation amont, le fond de chambre et la paroi extérieure et/ou intérieure étant fixés ensemble par leurs rebords de fixation, **caractérisée en ce que** des canaux de refroidissement (50, 150) sont réalisés entre ces rebords de fixation, ces canaux débouchant à l'intérieur de la chambre de combustion.

2. Chambre de combustion selon la revendication 1, comprenant, en outre, une entretoise (160) entre lesdits rebords de fixation.

3. Chambre de combustion selon la revendication 1 ou 2, dans laquelle les canaux de refroidissement sont formés par des rainures (51, 151) réalisées sur le rebord de fixation du fond de chambre, sur le rebord de fixation de ladite paroi et/ou sur l'éventuelle entretoise.

4. Chambre de combustion selon la revendication 2, dans laquelle les canaux de refroidissement sont réalisés dans l'épaisseur (E) de l'entretoise.

5. Chambre de combustion selon la revendication 1 ou 2, dans laquelle les canaux de refroidissement sont réalisés dans l'épaisseur de l'un des rebords de fixation.

6. Chambre de combustion selon l'une quelconque des revendications 1 à 5, dans laquelle les rebords de fixation et l'éventuelle entretoise sont festonnés.

7. Chambre de combustion selon l'une quelconque des revendications 1 à 6 présentant un axe principal (10), le rebord de fixation amont (138) étant sensiblement perpendiculaire à cet axe principal (10).

8. Chambre de combustion selon l'une quelconque des revendications 1 à 7, dans laquelle le fond de chambre et la paroi extérieure et/ou intérieure sont fixés ensemble par boulonnage à travers leurs rebords de fixation.

9. Turbomachine comprenant une chambre de combustion (24, 124) selon l'une quelconque des revendications précédentes.

## Patentansprüche

1. Ringförmige Brennkammer einer Turbomaschine, umfassend eine Innenwand (26, 126), eine Außenwand (28, 128) und einen zwischen den Wänden angeordneten Kammerboden (30, 130) im stromaufwärtigen Bereich der Kammer, wobei der Kammerboden einen äußeren (34, 134) und/oder inneren (32, 132) Befestigungsrand aufweist und wobei die Außen- und/oder Innenwand einen stromaufwärtigen Befestigungsrand aufweist/aufweisen, wobei der Kammerboden und die Außen- und/oder Innenwand durch ihre Befestigungsränder aneinander befestigt sind, **dadurch gekennzeichnet, dass** Kühlkanäle (50, 150) zwischen diesen Befestigungsrändern ausgebildet sind, wobei diese Kanäle innerhalb der Brennkammer ausmünden.

2. Brennkammer nach Anspruch 1, ferner umfassend einen Steg (160) zwischen den Befestigungsrändern.

3. Brennkammer nach Anspruch 1 oder 2, bei der die Kühlkanäle durch Nuten (51, 151) gebildet sind, die an dem Befestigungsrand des Kammerbodens, an dem Befestigungsrand der Wand und/oder an dem möglichen Steg ausgebildet sind.

4. Brennkammer nach Anspruch 2, bei der die Kühlkanäle in der Dicke (E) des Stegs ausgebildet sind.

5. Brennkammer nach Anspruch 1 oder 2, bei der die Kühlkanäle in der Dicke von einem der Befestigungsränder ausgebildet sind.

6. Brennkammer nach einem der Ansprüche 1 bis 5, bei der die Befestigungsränder und der mögliche Steg ausgezackt sind.

7. Brennkammer nach einem der Ansprüche 1 bis 6, mit einer Hauptachse (10), wobei der stromaufwärtige Befestigungsrand (138) zu dieser Hauptachse (10) im Wesentlichen senkrecht verläuft.

8. Brennkammer nach einem der Ansprüche 1 bis 7, bei der der Kammerboden und die Außen- und/oder Innenwand mittels Bolzenverbindung durch ihre Befestigungsränder hindurch aneinander befestigt sind.

9. Turbomaschine, umfassend eine Brennkammer (24, 124) nach einem der vorhergehenden Ansprüche.

## Claims

1. An annular combustion chamber for a turbomachine, the chamber comprising an inner wall (26,126), an outer wall (28,128), and a chamber end wall (30,130) disposed between said inner and outer walls in the upstream region of said chamber, the chamber end wall presenting an outer fastener rim (34,134) and/or an inner fastener rim (32,132), and the outer and/or inner wall presenting an upstream fastener rim, the chamber end wall and the outer and/or inner wall being fastened together via their fastener rims, **characterized in that** cooling channels (50,150) are made between said fastener rims, said channels opening out to the inside of the combustion chamber.

2. A combustion chamber according to claim 1, further comprising a spacer (160) between said fastener rims.

3. A combustion chamber according to claim 1 or 2, in which the cooling channels are formed by grooves (51,151) made in the fastener rim of the chamber end wall, in the fastener rim of said inner or outer wall, and/or in the spacer, if provided.

4. A combustion chamber according to claim 2, in which the cooling channels are made in the thickness (E) of the spacer.

5. A combustion chamber according to claim 1 or 2, in which the cooling channels are made in the thickness of one of the fastener rims.

6. A combustion chamber according to any one of claims 1 to 5, in which the fastener rims and the spacer, if provided, are scalloped.

7. A combustion chamber according to any one of claims 1 to 6, presenting a main axis (10), the upstream fastener rim (138) extending substantially perpendicularly to said main axis (10).

8. A combustion chamber according to any one of claims 1 to 7, in which the chamber end wall and the outer and/or inner walls are fastened together by bolts passing through their fastener rims.

9. A turbomachine including a combustion chamber (24,124) according to any one of the preceding claims.
